# EUROPEAN PATENT SPECIFICATION

(11) **EP 4 187 674 B1**
(45) Date of publication and mention of the grant of the patent: **15.10.2025**
(21) Application number: 21892297.9
(22) Date of filing: 09.11.2021
(51) Int. Cl.: H01M 10/42, H01M 50/20, H01R 13/621, H01R 9/24

(54) **BATTERY PACK, ELECTRONIC DEVICE, AUTOMOBILE, AND BATTERY MANAGEMENT SYSTEM MODULE**
BATTERIEPACK, ELEKTRONISCHE VORRICHTUNG, KRAFTFAHRZEUG UND BATTERIEVERWALTUNGSSYSTEMMODUL
BLOC-BATTERIE, DISPOSITIF ÉLECTRONIQUE, AUTOMOBILE ET MODULE DE SYSTÈME DE GESTION DE BATTERIE

(30) Priority: 13.11.2020 KR 20200152318
(43) Date of publication of application: 31.05.2023
(73) Proprietor: LG Energy Solution, Ltd., Seoul 07335 (KR)
(72) Inventor: LEE, Hyun-Jong, Daejeon 34122 (KR); PARK, Chang-Wook, Daejeon 34122 (KR)
(74) Representative: Goddar, Heinz J.
(86) International application number: PCT/KR2021/016280
(87) International publication number: WO 2022/103130

(56) References cited:
- EP-B1- 3 010 072
- JP-B2- 5 643 582
- JP-B2- 5 643 582
- KR-A- 20050 114 486
- KR-A- 20050 114 486
- KR-A- 20170 050 092
- KR-A- 20170 050 092
- KR-B1- 101 960 718
- KR-B1- 101 960 718
- KR-U- 20200 001 869
- KR-U- 20200 001 869

## Description

### TECHNICAL FIELD

The present disclosure relates to a battery pack, an electronic device, a vehicle, and a BMS module, and more particularly, to a battery pack that maintains a stable electrical connection and enhances the durability of interconnected parts, an electronic device and a vehicle including the battery pack, and a BMS module included in the battery pack. The present application claims priority to Korean Patent Application No. 10-2020-0152318 filed on November 13, 2020 in the Republic of Korea.

### BACKGROUND ART

In recent years, the demand for portable electronic products such as notebooks, video cameras, mobile phones, or the like is rapidly increasing, and the development of electric vehicles, energy storage batteries, robots, satellites, or the like is in earnest. For this reason, high-performance secondary batteries enabling repeated charging and discharging are being actively researched.

Secondary batteries commercialized at the present include nickel cadmium batteries, nickel hydrogen batteries, nickel zinc batteries, and lithium secondary batteries. Among them, lithium secondary batteries are in the spotlight due to advantages such as free charging and discharging by little memory effect compared to nickel-based secondary batteries, and very low self-discharge rate and high energy density.

The lithium secondary battery mainly uses a lithium-based oxide and a carbon material as a positive electrode active material and a negative electrode active material, respectively. Also, the lithium secondary battery includes an electrode assembly in which a positive electrode plate and a negative electrode plate respectively coated with the positive electrode active material and the negative electrode active material are disposed with a separator being interposed therebetween, and an exterior, namely a battery case, for hermetically storing the electrode assembly together with an electrolyte.

**In** addition, the lithium secondary battery may be classified depending on the exterior shape into a can-type battery cell in which an electrode assembly is included in a metal can and a pouch-type battery cell in which an electrode assembly is included in a pouch made of an aluminum laminate sheet.

Meanwhile, the battery pack of the prior art may include a plurality of can-type battery cells or pouch-type battery cells as above. In addition, the battery pack includes a cell frame for accommodating the plurality of battery cells and a bus bar or a metal plate configured to electrically connect the plurality of battery cells.

Meanwhile, the battery pack of the prior art basically includes a BMS (Battery Management System, hereinafter, referred to as BMS) module configured to measure the change of current and temperature of the plurality of battery cells and control charging and discharging of the plurality of battery cells in order to figure out a battery operating state or battery life. In addition, the BMS module of the prior art includes a wire for receiving the current of the plurality of battery cells, and a terminal block to which a terminal of the wire is connected.

In addition, the battery pack of the prior art needs to use a terminal block having a low electrical resistance and made of a soft material or a metal having relatively low mechanical rigidity in order to receive a large current. However, if such a terminal block made of a soft material or a metal with low mechanical rigidity is used, the terminal block is damaged by a fastening torque of a fastening bolt while the terminal of the wire is being coupled to the terminal block. Moreover, if a fastening bolt having a low fastening torque is used in order to prevent the terminal block from being damaged as above, the fastening bolt may be loosened from the terminal block by vibration or mechanical shock, which may release the electrical connection.

Patent document KR 10 2017 0050092 A describes a battery pack according to the preamble of independent claim 1.

### DISCLOSURE

### Technical Problem

The present disclosure is designed to solve the problems of the related art, and therefore the present disclosure is directed to providing a battery pack that maintains a stable electrical connection and enhances the durability of interconnected parts.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one claimed aspect of the present disclosure, there is provided a battery pack, comprising
a cell module having at least one battery cell; and
a BMS module including a BMS board configured to control charging and discharging of the cell module, a terminal block loaded on the BMS board and configured such that a connection terminal is placed thereon and to have a connection hole into which a bolt is inserted, a terminal bolt configured to be inserted into the connection hole, and a press-in nut having a body portion with a bolt hole into which a body of the terminal bolt is inserted, the bolt hole having a thread formed at an inner surface thereof, and a protruding portion configured to protrude outward from an outer circumference of the bolt hole and bonded to an outer circumference of the connection hole of the terminal block.

Also, the terminal block may include:
a loading portion having a plate shape so that a head portion of the terminal bolt is loaded thereon, the connection hole being located at a part of the loading portion; and
a mounting portion configured to extend downward from an end of the loading portion and to be partially fixed to the BMS board.

Moreover, the press-in nut may be configured such that an upper portion thereof faces a lower surface of the loading portion,
the protruding portion may be configured to at least partially pass through the connection hole of the loading portion, and
the protruding portion may be configured such that a protruding end thereof is bonded to an upper surface of the loading portion.

In addition, the terminal block may include a concave portion having a recessed space at the outer circumference of the connection hole, and the protruding portion may be accommodated in the recessed space of the concave portion of the terminal block in the form of being bent at least once.

Further, the terminal bolt and the press-in nut may have a first metal, and
the terminal block may have a second metal that is different from the first metal.

Also, the press-in nut may include a fixing protrusion formed at an upper portion thereof to be spaced apart from the protruding portion by a predetermined distance and configured to be at least partially press-fitted to the terminal block.

Moreover, the terminal block may include a fixing rib configured to protrude downward from the outer circumference of the connection hole and interposed between the protruding portion and the fixing protrusion.

Further, in another aspect of the present disclosure, there is also provided an electronic device, comprising at least one battery pack.

Also, in another aspect of the present disclosure, there is also provided a vehicle, comprising at least one battery pack.

Moreover, in another claimed aspect of the present disclosure, there is also provided a BMS module, comprising:
a BMS board having a circuit board to control charging and discharging of a plurality of battery cells;
a terminal block loaded on the BMS board and having a connection hole into which a bolt is inserted;
a terminal bolt inserted into and fixed to the connection hole; and
a press-in nut including a body portion having a bolt hole into which a body of the terminal bolt is inserted, the bolt hole having a thread formed at an inner surface thereof, and a protruding portion configured to protrude outward from an outer circumference of the bolt hole and bonded to an outer circumference of the connection hole of the terminal block.

### Advantageous Effects

According to an embodiment of the present disclosure, since the present disclosure include the press-in nut having the protruding portion bonded to the outer circumference of the connection hole of the terminal block, it is possible to solve the problem of the prior art that the terminal block is damaged while the terminal bolt and terminal block are being coupled if the fastening torque of the terminal bolt is large. That is, when the terminal bolt is fastened, a pressing force is generated downward toward the terminal block. At this time, as the press-in nut is screwed with the terminal bolt, the protruding portion presses the terminal block upward, which may offset the pressing force of the terminal bolt. Thus, the damage of the terminal block caused by the fastening torque of the terminal bolt may be effectively reduced.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery pack according to the first embodiment of the present disclosure.
FIG. 2 is an exploded perspective view schematically showing components of the battery pack according to the first embodiment of the present disclosure.
FIG. 3 is an exploded perspective view schematically showing some components of the battery pack according to the first embodiment of the present disclosure.
FIG. 4 is a vertically partially sectioned view schematically showing some components of the battery pack according to the first embodiment of the present disclosure.
FIG. 5 is a vertically partially sectioned view schematically showing some components of a battery pack according to the second embodiment of the present disclosure.
FIG. 6 is a vertically partially sectioned view schematically showing some components of a battery pack according to the third embodiment of the present disclosure.
FIG. 7 is a vertically partially sectioned view schematically showing some components of a battery pack according to the fourth embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other modifications could be made thereto without departing from the scope of the disclosure as defined by the claims.

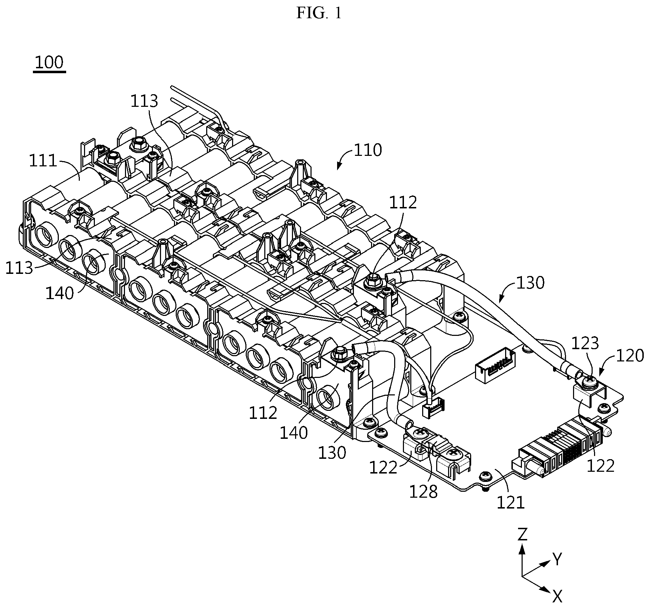

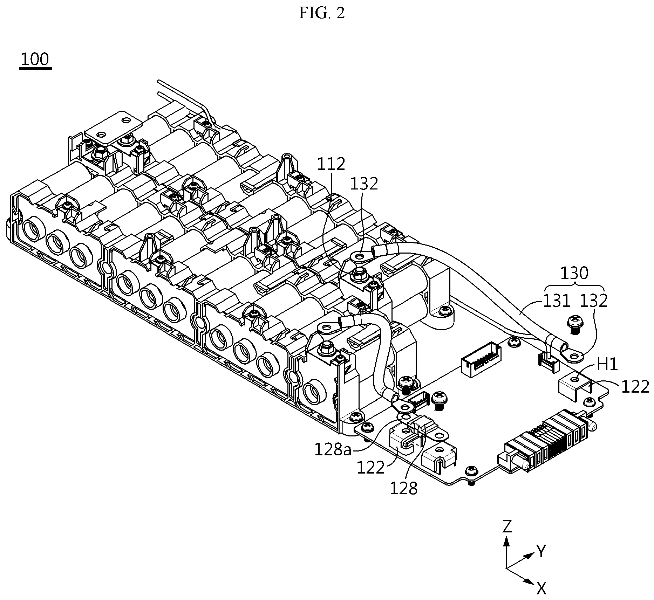

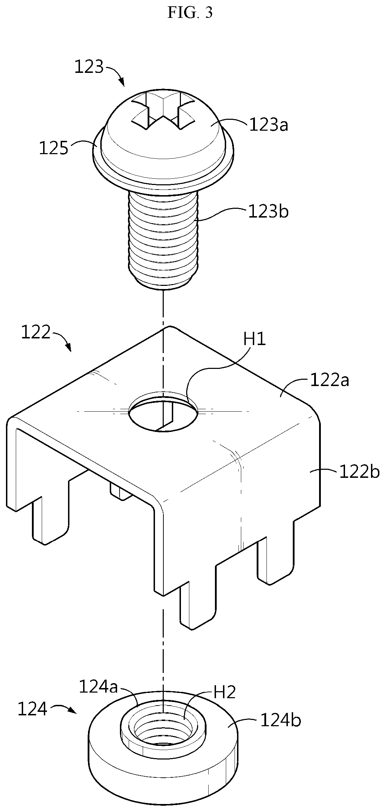

FIG. 1 is a perspective view schematically showing a battery pack according to the first embodiment of the present disclosure. FIG. 2 is an exploded perspective view schematically showing components of the battery pack according to the first embodiment of the present disclosure. Also, FIG. 3 is an exploded perspective view schematically showing some components of the battery pack according to the first embodiment of the present disclosure.

Referring to FIGS. 1 to 3, the battery pack 100 according to the first embodiment of the present disclosure includes a cell module 110 having at least one battery cell 111, and a BMS module 120. First, the cell module 110 may include a cell frame 113 for accommodating the battery cell 111. For example, as shown in FIG. 2, the battery pack 100 may include a plurality of battery cells 111 and a cell frame 113 for accommodating the plurality of battery cells 111 in an arranged state. The cell frame 113 may include a plurality of members configured to surround one end and the other end of the plurality of battery cells 111 in the Y-axis direction, respectively.

In addition, the battery cell 111 may be a lithium secondary battery capable of charging and discharging. The battery cell 111 may be a can-type battery cell. The battery cell 111 may include a positive electrode terminal (not shown) and a negative electrode terminal (not shown) at one end and the other end, respectively. The battery cell 111 may have a cylindrical can.

The above configuration of the battery cell 111 is widely known to those skilled in the art at the time of filing of this application, and thus will not be described in more detail. In addition, although an example of the cylindrical battery cell 111 is illustrated in FIGS. 1 and 2, the battery pack 100 according to the present disclosure is not limited to the configuration of the battery cell 111 having a specific shape. That is, various types of battery cells 111 known at the time of filing of this application may be employed in the battery pack 100 according to the present disclosure.

Moreover, the cell module 110 may include a metal plate 140 for electrically connecting the plurality of battery cells 111. The metal plate 140 may have a connection terminal 112 for electrical connection with the BMS board 121.

In addition, the BMS module 120 may include a BMS board 121, a terminal block 122, a terminal bolt 123, and a press-in nut 124. Specifically, the BMS board 121 may include, for example, a substrate made of an electrically insulating material and a printed circuit. The printed circuit may be configured to be electrically connected to the terminal block 122. A fuse 128, a relay, and the like for electrical control of the plurality of battery cells 111 may be mounted on the BMS board 121. However, the BMS board 121 does not necessarily include a printed circuit, and may include only an electrically insulating board configured such that elements such as a fuse and a relay are loaded thereon.

Further, the terminal block 122 may be configured to be loaded on the BMS board 121. The terminal block 122 may be made of, for example, a metal material. The terminal block 122 may be provided with brass. For example, the terminal block 122 may be mounted on the BMS board 121 to be electrically connected to the printed circuit. However, the terminal block 122 is not necessarily mounted on the BMS board 121, and may be configured to be electrically connected to various control elements such as a fuse and a relay.

In addition, the terminal block 122 may be configured so that a connection terminal 132 may be placed thereon. The connection terminal 132 may be provided at an end of the cable 130 having a wire 131 to electrically connect the battery cell 111 and the terminal block 122, for example. However, the present disclosure is not necessarily limited to this configuration, and as shown in FIG. 2, the fuse 128 or the relay may include a separate connection terminal 128a that may be electrically connected to the terminal block 122. Moreover, the terminal block 122 may have a connection hole H1 into which a bolt may be inserted. That is, the connection hole H1 may be a hole perforated in the vertical direction so that a body 123b of the bolt is inserted.

In addition, the terminal bolt 123 may be configured such that the body 123b is inserted into the connection hole H1. The head 123a of the terminal bolt 123 may be loaded on the upper portion of the terminal block 122. For example, as shown in FIG. 1, the connection terminal 132 of the cable 130 may be inserted between the head 123a of the terminal bolt 123 and the terminal block 122 in an interposed state. The terminal bolt 123 may be fixed on the terminal block 122 by fastening the press-in nut 124 in a state where the press-in nut 124 is inserted into the body 123b. The terminal bolt 123 may be steel or stainless iron.

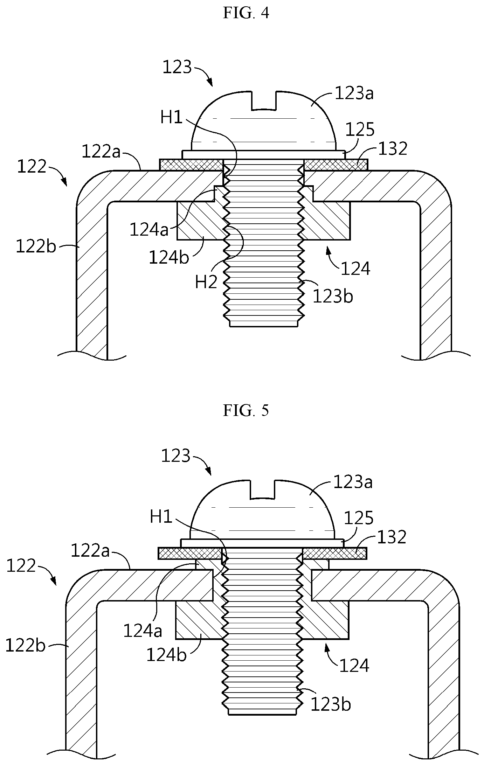

FIG. 4 is a vertically partially sectioned view schematically showing some components of the battery pack according to the first embodiment of the present disclosure.

Referring to FIG. 4 along with FIGS. 2 and 3, moreover, the press-in nut 124 may include a body portion 124b and a protruding portion 124a. The body portion 124b may have a bolt hole H2 into which the body 123b of the terminal bolt 123 may be inserted. The bolt hole H2 may have a thread formed on an inner surface thereof. The press-in nut 124 may be screwed with the terminal bolt 123. The protruding portion 124a may protrude outward from the outer circumference of the bolt hole H2.

Also, the protruding portion 124a may be bonded to the outer circumference of the connection hole H1 of the terminal block 122. In this case, mechanical bonding may be used as the bonding method. For example, the protruding portion 124a of the press-in nut 124 may be compressed by a press and bonded to the terminal block 122. The press-in nut 124 may be steel or stainless iron.

In addition, the battery pack 100 may further include a cable 130 having the connection terminal 132. For example, the cable 130 may have a connection terminal 132 at each of both ends thereof. The connection terminal 132 provided at one end of the cable 130 may be configured to contact the connection terminal 112 of the cell module 110. The connection terminal 132 provided at the other end of the cable 130 may be configured to contact the terminal block 122 mounted on the BMS board 121.

Therefore, according to this configuration of the present disclosure, since the present disclosure include the press-in nut 124 having the protruding portion 124a bonded to the outer circumference of the connection hole H1 of the terminal block 122, it is possible to solve the problem of the prior art that the terminal block 122 is damaged while the terminal bolt 123 and terminal block 122 are being coupled if the fastening torque of the terminal bolt 123 is large. That is, when the terminal bolt 123 is fastened, a pressing force is generated downward toward the terminal block 122. At this time, as the press-in nut 124 is screwed with the terminal bolt 123, the protruding portion 124a presses the terminal block 122 upward, which may offset the pressing force of the terminal bolt 123. Thus, the damage of the terminal block 122 caused by the fastening torque of the terminal bolt 123 may be effectively reduced.

Referring to FIGS. 2 and 3 again, the terminal block 122 may include a loading portion 122a and a mounting portion 122b. The loading portion 122a may have a plate shape so that the head 123a of the terminal bolt 123 is loaded thereon. For example, the terminal block 122 may have a loading portion 122a of a rectangular plate shape at an upper portion thereof. The loading portion 122a may have a connection hole H1 formed in a part thereof so that the terminal bolt 123 is inserted therein.

In addition, the mounting portion 122b may have a shape extending downward from an end of the loading portion 122a. The mounting portion 122b may be configured such that a part thereof is fixed to the BMS board 121. For example, as shown in FIG. 2, the mounting portion 122b may be fixed in a state where an end thereof is inserted into the BMS board 121. That is, the mounting portion 122b may be electrically connected to the printed circuit of the BMS board 121.

Moreover, the BMS board 121 may further include a washer 125 configured to be interposed between the terminal block 122 and the head 123a of the terminal bolt 123. For example, the washer 125 may be a spring washer.

FIG. 5 is a vertically partially sectioned view schematically showing some components of a battery pack according to the second embodiment of the present disclosure.

Referring to FIG. 5, in the battery pack 100 according to the second embodiment of the present disclosure, the protruding portion 124a may have a different shape, when compared with the press-in nut 124 of FIG. 4. Other components may be the same as those of the battery pack 100 according to the first embodiment.

Specifically, the press-in nut 124 of FIG. 5 may be located so that an upper portion thereof faces the lower surface of the loading portion 122a. The protruding portion 124a may be configured to at least partially pass through the connection hole H1 of the loading portion 122a. A protruding end of the protruding portion 124a may be bonded to the upper surface of the loading portion 122a. For example, as shown in FIG. 5, the protruding portion 124a of the press-in nut 124 may pass through the connection hole H1 of the terminal block 122. The protruding portion 124a passing through the connection hole H1 may be bent in a horizontal direction to be in close contact with or be bonded to the upper surface of the terminal block 122. That is, the press-in nut 124 is compressed upward toward the loading portion 122a of the terminal block 122 and then press the protruding portion 124a passing through the connection hole H1 downward again so that the end of the protruding portion 124a comes into close contact with or is bonded to the upper surface of the terminal block 122 in a horizontally bent form. The protruding portion 124a may have a circular shape extending in a planar form along the outer circumference of the connection hole H1.

Therefore, according to this configuration of the present disclosure, since the protruding end of the protruding portion 124a of the press-in nut 124 is bonded to the upper surface of the loading portion 122a, the press-in nut 124 may maintain a stable combined state with the terminal block 122. For example, when a high-temperature heating process is applied in the manufacturing process of the BMS module 120, in order to prevent the bonding state from being released due to different thermal expansions of the terminal block 122 and the press-in nut 124, in the present disclosure, the protruding portion 124a of the press-in nut 124 may be in close contact with or bonded to both the lower surface and the upper surface of the loading portion 122a of the terminal block 122. Accordingly, in the present disclosure, it is possible to effectively prevent the press-in nut 124 from being detached from the terminal block 122.

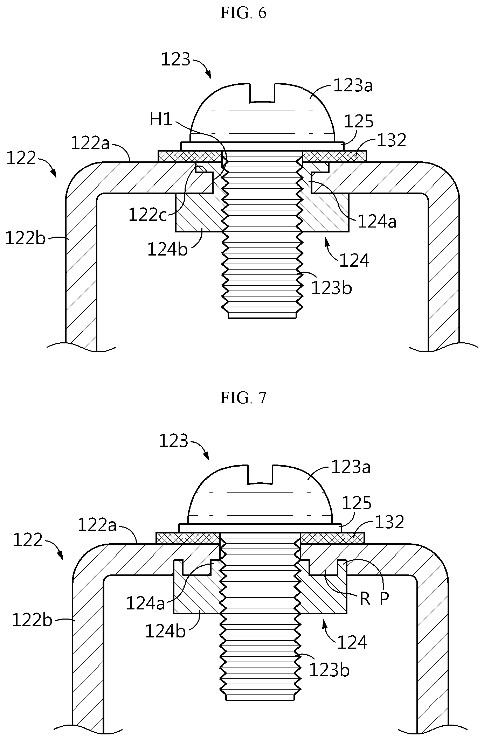

FIG. 6 is a vertically partially sectioned view schematically showing some components of a battery pack according to the third embodiment of the present disclosure.

Referring to FIG. 6, the battery pack 100 according to the third embodiment of the present disclosure may further include a concave portion 122c formed at the terminal block 122, when compared with the BMS module 120 of the first embodiment of FIG. 4.

Specifically, the terminal block 122 of the battery pack 100 according to the third embodiment of the present disclosure may include a concave portion 122c having a recessed space at the outer circumference of the connection hole H1. The concave portion 122c may have a shape of a linear groove extending circularly in a planar form along the outer circumference of the connection hole H1 and recessed into the body 123b.

In addition, the protruding end of the protruding portion 124a of the press-in nut 124 may be accommodated in the recessed space of the concave portion 122c. The protruding end of the protruding portion 124a may have a shape that is bent at least once. For example, the protruding portion 124a may be bent so that its part protruding upward through the connection hole H1 of the terminal block 122 is accommodated in the concave portion 122c by a burring process. The protruding portion 124a may have a shape circularly extending in a planar form along the outer circumference of the connection hole H1.

Therefore, according to this configuration of the present disclosure, since the protruding portion 124a is accommodated in the recessed space of the concave portion 122c of the terminal block 122 in the form of being bent at least once, the bonding area of the terminal block 122 and the press-in nut 124 may be effectively increased, thereby effectively enhancing the bonding force between the press-in nut 124 and the terminal block 122. Accordingly, in the present disclosure, it is possible to effectively prevent the press-in nut 124 from being detached from the terminal block 122.

Meanwhile, referring to FIGS. 3 and 4 again, in the battery pack 100 according to the first embodiment of the present disclosure, the terminal bolt 123 and the press-in nut 124 may include a first metal. The first metal may be selected in preferential consideration of easy processability and good durability, which are advantageous for the manufacture and production of the terminal bolt 123 and the press-in nut 124. The first metal may be, for example, steel or stainless steel. The terminal block 122 may have a second metal, which is different from the first metal. For example, the second metal may be brass selected in preferential consideration of low electrical resistance in order to receive a large current. That is, the first metal may be a metal having higher mechanical rigidity (hardness, tensile strength) than the second metal.

Therefore, according to this configuration of the present disclosure, even if the terminal block 122 has the second metal (brass) that is a relatively soft material, since the terminal bolt 123 and the press-in nut 124 are the first metal (steel) identically, the force (fastening torque) of the terminal bolt 123 to press the terminal block 122 downward and the force of the press-in nut 124 to press the terminal block 122 upward may offset each other out. Thus, the terminal bolt 123 may be fixed to the terminal block 122 at a higher fastening torque without damaging the terminal block 122.

FIG. 7 is a vertically partially sectioned view schematically showing some components of a battery pack according to the fourth embodiment of the present disclosure.

Referring to FIG. 7, the press-in nut 124 of the battery pack 100 according to the fourth embodiment of the present disclosure may further include a fixing protrusion P, when compared with the press-in nut 124 of the first embodiment. The fixing protrusion P may be located at an upper portion of the press-in nut 124 to be spaced apart from the protruding portion 124a by a predetermined distance. For example, the fixing protrusion P may be located on the outer circumference of the upper surface of the press-in nut 124.

In addition, the fixing protrusion P may be configured such that at least a part thereof is press-fitted to the terminal block 122. For example, as shown in FIG. 7, the fixing protrusion P may be partially inserted into and fixed to the loading portion 122a of the terminal block 122. The fixing protrusion P may extend circularly along the outer circumference of the upper surface of the press-in nut 124 in a planar form.

Therefore, according to this configuration of the present disclosure, since the press-in nut 124 includes the fixing protrusion P configured to be at least partially press-fitted to the terminal block 122, the bonding force between the press-in nut 124 and the terminal block 122 may be effectively increased. Accordingly, in the present disclosure, it is possible to effectively enhance the durability of the battery pack 100.

Meanwhile, an electronic device (not shown) according to an embodiment of the present disclosure includes at least one battery pack 100 described above. The electronic device may further include a device housing (not shown) having a storage space for accommodating the battery pack 100 and a display unit through which a user may check the state of charge of the battery pack 100. For example, the electronic device may be a portable computer.

In addition, the battery pack 100 according to an embodiment of the present disclosure may be included in a vehicle such as an electric vehicle or a hybrid electric vehicle. That is, the vehicle according to an embodiment of the present disclosure may include at least one battery pack 100 according to an embodiment of the present disclosure described above in a vehicle body.

Moreover, the BMS module 120 according to an embodiment of the present disclosure may include a BMS board 121 having a printed circuit to control charging and discharging of a plurality of battery cells 111, a terminal block 122 loaded on the BMS board 121 and having a connection hole H into which a bolt may be inserted, a terminal bolt 123 configured to be inserted into and fixed to the connection hole H1, and a press-in nut 124 including a body portion 124b having a bolt hole H2 into which a body 123b of the terminal bolt 123 may be inserted, the bolt hole H2 having a thread formed at an inner surface thereof, and a protruding portion 124a configured to protrude outward from an outer circumference of the bolt hole H2 and bonded to an outer circumference of the connection hole H1 of the terminal block 122. The above components of the BMS module 120 are the same as those of the battery pack 100 described above, and thus will not be described in detail here.

Meanwhile, even though the terms indicating directions such as upper, lower, left, right, front and rear directions are used in the specification, it is obvious to those skilled in the art that these merely represent relative locations for convenience in explanation and may vary based on a location of an observer or an object.

Hereinafter, embodiments and experimental examples have been described in detail for better understanding of the present disclosure in detail, but the present disclosure is not limited by these embodiments and experimental examples. The embodiments according to the present disclosure may be modified in various ways, and the scope of the present disclosure should not be construed as being limited to the embodiments described above. said scope only being limited by the appended claims.

The embodiments of the present disclosure are provided to more fully explain the present disclosure to those having average knowledge in the art.

## Claims

1. A battery pack (100), comprising:
a cell module (110) having at least one battery cell (111); and
a BMS module (120) including a BMS board (121) configured to control charging and discharging of the cell module (110), a terminal block (122) loaded on the BMS board (121) and configured such that a connection terminal (132) is placed thereon and to have a connection hole (H1), a terminal bolt (123) configured to be inserted into the connection hole (H1),
**characterized by** a press-in nut (124) having a body portion (124b) with a bolt hole (H2) into which a body (123b) of the terminal bolt (123) is inserted, the bolt hole (H2) having a thread formed at an inner surface thereof, and a protruding portion (124a) configured to protrude outward from an outer circumference of the bolt hole (H2) and bonded to an outer circumference of the connection hole (H1) of the terminal block (122).

2. The battery pack (100) according to claim 1,
wherein the terminal block (122) includes:
a loading portion (122a) having a plate shape so that a head portion of the terminal bolt (123) is loaded thereon, the connection hole (H1) being located at a part of the loading portion (122a); and
a mounting portion (122b) configured to extend downward from an end of the loading portion (122a) and to be partially fixed to the BMS board (121).

3. The battery pack (100) according to claim 2,
wherein the press-in nut (124) is configured such that an upper portion thereof faces a lower surface of the loading portion (122a),
the protruding portion (124a) is configured to at least partially pass through the connection hole (H1) of the loading portion (122a), and
the protruding portion (124a) is configured such that a protruding end thereof is bonded to an upper surface of the loading portion (122a).

4. The battery pack (100) according to claim 2,
wherein the terminal block (122) includes a concave portion (122c) having a recessed space at the outer circumference of the connection hole (H1), and
the protruding portion (124a) is accommodated in the recessed space of the concave portion (122c) of the terminal block (122) in the form of being bent at least once.

5. The battery pack (100) according to claim 1,
wherein the terminal bolt (123) and the press-in nut (124) have a first metal, and
the terminal block (122) has a second metal that is different from the first metal.

6. The battery pack (100) according to claim 1,
wherein the press-in nut (124) includes a fixing protrusion formed at an upper portion thereof to be spaced apart from the protruding portion (124a) by a predetermined distance and configured to be at least partially press-fitted to the terminal block (122).

7. The battery pack (100) according to claim 6,
wherein the terminal block (122) includes a fixing rib configured to protrude downward from the outer circumference of the connection hole (H1) and interposed between the protruding portion (124a) and the fixing protrusion.

8. An electronic device, comprising at least one battery pack (100) according to any one of claims 1 to 7.

9. A vehicle, comprising at least one battery pack (100) according to any one of claims 1 to 7.

10. A BMS module (120), comprising:
a BMS board (121) having a circuit board to control charging and discharging of a plurality of battery cells (111);
a terminal block (122) loaded on the BMS board (121) and having a connection hole (H1);
a terminal bolt (123) inserted into and fixed to the connection hole (H1); and
a press-in nut (124) including a body portion (124b) having a bolt hole (H2) into which a body (123b) of the terminal bolt (123) is inserted, the bolt hole (H2) having a thread formed at an inner surface thereof, and a protruding portion (124a) configured to protrude outward from an outer circumference of the bolt hole (H2) and bonded to an outer circumference of the connection hole (H1) of the terminal block (122).

## Patentansprüche

1. Batteriepack (100), umfassend:
ein Zellenmodul (110) mit mindestens einer Batteriezelle (111); und
ein BMS-Modul (120), umfassend
eine BMS-Platine (121), die konfiguriert ist, um das Laden und Entladen des Zellenmoduls (110) zu steuern,
einen Anschlussblock (122), der auf die BMS-Platine (121) geladen und so konfiguriert ist, dass ein Verbindungsanschluss (132) darauf platziert ist und ein Verbindungsloch (H1) aufweist,
einen Anschlussbolzen (123), der konfiguriert ist, um in das Verbindungsloch (H1) eingeführt zu werden,
**gekennzeichnet durch** eine Einpressmutter (124) mit
einem Körperabschnitt (124b) mit einem Bolzenloch (H2), in das ein Körper (123b) des Anschlussbolzens (123) eingeführt wird, wobei das Bolzenloch (H2) ein Gewinde aufweist, das an einer Innenfläche davon ausgebildet ist, und
einem vorstehenden Abschnitt (124a), der konfiguriert ist, um von einem Außenumfang des Bolzenlochs (H2) nach außen vorzustehen und mit einem Außenumfang des Verbindungslochs (H1) des Anschlussblocks (122) verbunden ist.

2. Batteriepack (100) nach Anspruch 1,
wobei der Anschlussblock (122) Folgendes umfasst:
einen Ladeabschnitt (122a) mit einer Plattenform, so dass ein Kopfabschnitt des Anschlussbolzens (123) darauf geladen wird, wobei sich das Verbindungsloch (H1) an einem Teil des Ladeabschnitts (122a) befindet; und
einen Montageabschnitt (122b), der konfiguriert ist, um sich von einem Ende des Ladeabschnitts (122a) nach unten zu erstrecken und teilweise an der BMS-Platine (121) befestigt zu werden.

3. Batteriepack (100) nach Anspruch 2, wobei
die Einpressmutter (124) so konfiguriert ist, dass ein oberer Abschnitt davon einer unteren Fläche des Ladeabschnitts (122a) zugewandt ist,
der vorstehende Abschnitt (124a) konfiguriert ist, um mindestens teilweise durch das Verbindungsloch (H1) des Ladeabschnitts (122a) zu verlaufen, und
der vorstehende Abschnitt (124a) so konfiguriert ist, dass ein vorstehendes Ende davon mit einer oberen Fläche des Ladeabschnitts (122a) verbunden ist.

4. Batteriepack (100) nach Anspruch 2, wobei
der Anschlussblock (122) einen konkaven Abschnitt (122c) mit einem ausgesparten Raum am Außenumfang des Verbindungslochs (H1) umfasst, und
der vorstehende Abschnitt (124a) in dem ausgesparten Raum des konkaven Abschnitts (122c) des Anschlussblocks (122) in der Form untergebracht ist, dass er mindestens einmal gebogen ist.

5. Batteriepack (100) nach Anspruch 1, wobei
der Anschlussbolzen (123) und die Einpressmutter (124) ein erstes Metall aufweisen, und
der Anschlussblock (122) ein zweites Metall aufweist, das sich von dem ersten Metall unterscheidet.

6. Batteriepack (100) nach Anspruch 1, wobei
die Einpressmutter (124) einen Befestigungsvorsprung umfasst, der an einem oberen Abschnitt davon ausgebildet ist, um von dem vorstehenden Abschnitt (124a) um einen vorbestimmten Abstand beabstandet zu sein, und konfiguriert ist, um mindestens teilweise in den Anschlussblock (122) eingepresst zu sein.

7. Batteriepack (100) nach Anspruch 6, wobei
der Anschlussblock (122) eine Befestigungsrippe umfasst, die konfiguriert ist, um von dem Außenumfang des Verbindungslochs (H1) nach unten vorzustehen und zwischen dem vorstehenden Abschnitt (124a) und dem Befestigungsvorsprung angeordnet ist.

8. Elektronische Vorrichtung, umfassend mindestens ein Batteriepack (100) nach einem der Ansprüche 1 bis 7.

9. Fahrzeug, umfassend mindestens ein Batteriepack (100) nach einem der Ansprüche 1 bis 7.

10. BMS-Modul (120), umfassend:
eine BMS-Platine (121) mit einer Schaltungsplatine, um das Laden und Entladen einer Vielzahl von Batteriezellen (111) zu steuern;
einen Anschlussblock (122), der auf die BMS-Platine (121) geladen ist und ein Verbindungsloch (H1) aufweist,
einen Anschlussbolzen (123), der in das Verbindungsloch (H1) eingeführt und daran befestigt ist; und
eine Einpressmutter (124), umfassend
einen Körperabschnitt (124b) mit einem Bolzenloch (H2), in das ein Körper (123b) des Anschlussbolzens (123) eingeführt ist, wobei das Bolzenloch (H2) ein Gewinde aufweist, das an einer Innenfläche davon ausgebildet ist, und
einen vorstehenden Abschnitt (124a), der konfiguriert ist, um von einem Außenumfang des Bolzenlochs (H2) nach außen vorzustehen und mit einem Außenumfang des Verbindungslochs (H1) des Anschlussblocks (122) verbunden ist.

## Revendications

1. Bloc-batterie (100) comprenant :
un module de cellule (110) possédant au moins une cellule de batterie (111) ; et
un module BMS (120) possédant une carte BMS (121) configuré pour contrôler la charge et la décharge du module de cellule (110), un bornier (122) chargé sur la carte BMS (121) et configuré de sorte qu'une borne de connexion (132) soit placée dessus et qu'il possède un orifice de connexion (H1), un boulon de borne (123) étant configuré pour être inséré dans l'orifice de connexion (H1),
**caractérisé par** un écrou à enfoncer (124) possédant une partie de corps (124b) avec un trou de boulon (H2) dans lequel s'insère un corps (123b) du boulon de borne (123), le trou de boulon (H2) possédant un filetage formé sur une surface intérieure de celui-ci, et une partie saillante (124a) configurée pour faire saillie, vers l'extérieur, d'une circonférence extérieure du trou de boulon (H2), et fixée sur une circonférence extérieure de l'orifice de connexion (H1) du bornier (122).

2. Bloc-batterie (100) selon la revendication 1,
le bornier (122) comprenant :
une partie de chargement (122a) de forme plate, afin qu'une partie de tête du boulon de borne (123) soit chargée dessus, l'orifice de connexion (H1) étant situé dans un élément de la partie de chargement (122a) ; et
une partie de montage (122b) étant configurée pour s'étendre vers le bas depuis un bout de la partie de chargement (122a) et être partiellement fixée sur la carte BMS (121).

3. Bloc-batterie (100) selon la revendication 2,
l'écrou à enfoncer (124) étant configuré de sorte qu'une partie supérieure de celui-ci soit tournée vers une surface inférieure de la partie de chargement (122a),
la partie saillante (124a) étant configurée de façon à passer au moins partiellement à travers l'orifice de connexion (H1) de la partie de chargement (122a), et
la partie saillante (124a) étant configurée de sorte qu'une partie saillante de celle-ci soit fixée sur une surface supérieure de la partie de chargement (122a).

4. Bloc-batterie (100) selon la revendication 2,
le bornier (122) comprenant une partie concave (122c) dotée d'un espace évidé sur la circonférence extérieure de l'orifice de connexion (H1), et
la partie saillante (124a) étant logée dans l'espace évidé de la partie concave (122c) du bornier (122) sous une forme permettant son cintrage au moins une fois.

5. Bloc-batterie (100) selon la revendication 1,
le boulon de borne (123) et l'écrou à enfoncer (124) comportant un premier métal, et le bornier (122) comportant un deuxième métal différent du premier métal.

6. Bloc-batterie (100) selon la revendication 1,
l'écrou à enfoncer (124) comprenant une saillie de fixation réalisée sur une partie supérieure de celui-ci, qui doit être espacée de la partie saillante (124a) d'une distance prédéterminée, et configurée pour être assemblée par pression au moins partiellement sur le bornier (122).

7. Bloc-batterie (100) selon la revendication 6,
le bornier (122) comprenant une nervure de fixation configurée pour faire saillie vers le bas depuis le pourtour extérieur de l'orifice de connexion (H1), et intercalée entre la partie saillante (124a) et la saillie de fixation.

8. Dispositif électronique comprenant au moins un bloc-batterie (100) selon une quelconque des revendications 1 à 7.

9. Véhicule comprenant au moins un bloc-batterie (100) selon une quelconque des revendications 1 à 7.

10. Module BMS (120) comprenant :
une carte BMS (121) possédant une carte de circuit pour contrôler la charge et la décharge d'une pluralité de cellules de batterie (111) ;
un bornier (122) chargé sur la carte BMS (121) et possédant un orifice de connexion (H1) ;
un boulon de borne (123) inséré et fixé dans l'orifice de connexion (H1) ; et
un écrou à enfoncer (124) possédant une partie de corps (124b) avec un trou de boulon (H2) dans lequel s'insère un corps (123b) du boulon de borne (123), le trou de boulon (H2) possédant un filetage formé sur une surface intérieure de celui-ci, et une partie saillante (124a) configurée pour dépasser, vers l'extérieur, d'une circonférence extérieure du trou de boulon (H2), et fixée sur une circonférence extérieure de l'orifice de connexion (H1) du bornier (122).
